# EUROPEAN PATENT APPLICATION

(11) **EP 4 647 407 A1**
(43) Date of publication of application: **12.11.2025**
(21) Application number: 24174950.6
(22) Date of filing: 08.05.2024
(51) Int. Cl.: C03C 3/23, C03C 4/18, C03C 10/16, H01M 10/0525, H01M 10/0562

(54) **GLASS CERAMIC SOLID ELECTROLYTE**

(71) Applicant: Belenos Clean Power Holding AG, 2502 Bienne (CH)
(72) Inventor: AFYON, Semih, 4310 Rheinfelden (CH); PFENNINGER, Reto, 4612 Wangen bei Olten (CH); SCHNEEBERGER, Peter, 4448 Läufelefingen (CH); HAERING, Pascal, 4147 Aesch (CH)
(74) Representative: ICB SA

(57) **Abstract**

The present invention relates to a glass ceramic solid electrolyte mixture comprising glass ceramic solid electrolyte comprising a ternary glass ceramic of borate, Li₂SO₄ and a lithium halide. The invention further relates to a glass ceramic solid electrolyte obtained from the mixture, a solid state battery comprising the glass ceramic solid electrolyte, and to methods of producing the glass ceramic solid electrolyte and the solid state battery.

## Description

### Technical field of the invention

The present invention relates to a glass ceramic solid electrolyte and solid state batteries, in particular lithium ion batteries, comprising the glass ceramic solid electrolyte. The invention further relates to methods of producing the glass ceramic solid electrolyte.

### Background

Inorganic materials, such as ceramics, are widely used in electronics, energy storage and extreme environments due to their high thermal, mechanical and chemical stability. Conventional synthesis of such inorganic materials often involves a solid state reaction to form the inorganic component from a precursor, and sintering the inorganic component to obtain a solid (inorganic) component. Each step typically requires high temperatures and long processing time.

The long processing time is also one of the issues of the conventional methods in the production of inorganic-based (e.g. ceramic-based) solid (state) electrolytes (SSEs). Such SSEs are a promising alternative to for example liquid electrolytes, which may leak from the battery, thereby imposing safety issues. In particular, materials such as phosphorus oxynitride and thio-LiₓA_{1-y}M_{y}S₄ (A being Si or Ge and M being P, Al, Zn, Ga or Sb) are promising materials for SSEs showing excellent ionic conductivities in the range of 10⁻⁴ S/cm. However, these materials have a high production cost, in particular related to high energy consumption due to high sintering temperatures, and frequent contact loss between the electrode and the SSE is noticed upon extended charging/discharging cycling, thereby limiting the lifetime of batteries comprising these solid electrolytes.

Glassy and glass ceramic solid electrolytes have therefore gained interest, as they are known to allow sintering at a lower, but still considerably high, temperature. In particular borates based glass ceramics have gained interest, and are known to include two components phases using B₂O₃, LiBO₂ and occasionally Li₃BO₃.

Study of electrical conductivity of Li2O-B2O3-SiO2-Li2SO4 glasses and glass-ceramics, S.S. Gundale, V.V. Behare et al., Solid State Ionics, Volume 298 (2016), pages 57-62, discloses the synthesis of glass and glass ceramics for SSEs in a Li₂O-B₂O₃-SiO₂-Li₂SO₄ system. The method includes melt-quenching and single stage heat treatment. The highest conductivity (4.08 * 10⁻⁴ S/cm) was measured for synthesized glass with composition 40Li₂O:30B₂O₃:15SiO₂:15Li₂SO₄ at 250 °C, while the ionic conductivity for the glass ceramics were noticed to be lower than for the glasses.

Disadvantages of the foregoing process is the complexity thereof, requiring an adapted environment and equipment for the melt-quenching. A further disadvantage is the high temperature required during the heat treatment due to the presence of SiO₂ (silicate), which has a high melting temperature.

Optimization of a heterogeneous ternary Li3PO4-Li3BO3-Li2SO4 mixture for Li-ion conductivity by machine learning, Kenji Homma, Yu Liu, et al., The Journal of Physical Chemistry C 124, 24 (2020), pages 12865-12870, discloses the use of machine learning to optimize the composition ratio of ternary Li₃PO₄-Li₃BO₃-Li₂SO₄ for Li-ion conductivity. Upon defining the optimum composition by machine learning (25:14:61 Li₃PO₄:Li₃BO₃:Li₂SO₄ in mol %), the mixture was prepared and sintered at a temperature determined from melting points and phase transitions of the mixture (in the range of 620-1000 °C for 12 h). The Li-ion conductivity for this mixture is 4.9 × 10⁻⁴ S/cm at 300 °C.

A disadvantage of the foregoing method is the still relatively high sintering temperature required, which is believed to be steered by the use of Li₃PO₄, which has a high melting temperature.

While the ionic conductivities of the two publications mentioned hereinabove may seem acceptable, it is to be noted that these values are only obtained at 250 °C and at 300 °C, respectively, which are temperatures that are not realistic for batteries. It is known in the art that the ionic conductivity decreases with decreasing temperature of testing, which means that at temperatures between room temperature and 100 °C it can be expected that the ionic conductivity values for the sintered materials will be unacceptably low, making the material unsuited for use of the sintered material as a solid electrolyte in a battery.

### Summary of the invention

It is an aim of the present invention to overcome one or more of the foregoing drawbacks. It is an aim of the present invention to provide a glass ceramic solid electrolyte (i.e. a solid state electrolyte, SSE) having a good total ionic conductivity when in use in a battery cell, both at room temperature and elevated temperatures.

At the same time it is an aim of the invention to provide a method to produce the glass ceramic SSEs, the method being less energy consuming when compared to methods known in the art. It is a further aim to provide a method of producing the glass ceramic SSEs, comprising sintering at a temperature lower than prior art sintering methods, wherein the obtained SSEs have a performance, in particular a total ionic conductivity when in use in a battery cell, that is equal to or better than glass ceramic SSEs obtained with traditional high temperature sintering processes.

It is a further aim to provide a method of producing a solid state battery (SSB), in particular an all ceramic SSB, wherein some or all components - including the anode and/or the cathode - can be assembled and then sintered together, thereby reducing the overall energy consumption of the method of producing the SSB, as well as the complexity of the process and the number of steps required.

According to a first aspect of the present disclosure, there is provided a glass ceramic solid electrolyte mixture as set out in the appended claims.

The glass ceramic solid electrolyte mixture comprises or substantially consists of a ternary glass ceramic of borate, Li₂SO₄ and a lithium halide.

Advantageously, the glass ceramic solid electrolyte mixture comprises between 50 and 85 % by weight, preferably between 60 and 80 % by weight, more preferably between 65 and 75 % by weight, for example 70 % by weight of borate, based on the total weight of the glass ceramic solid electrolyte mixture.

Advantageously, the glass ceramic solid electrolyte mixture comprises between 10 and 40 % by weight, preferably between 15 and 35 % by weight, more preferably between 20 and 30 % by weight, for example 25 % by weight Li₂SO₄, based on the total weight of the glass ceramic solid electrolyte mixture.

Advantageously, the glass ceramic solid electrolyte mixture comprises between 1 and 10 % by weight, preferably between 2 and 8 % by weight, more preferably between 3 and 7 % by weight, for example 5 % by weight of lithium halide, based on the total weight of the glass ceramic solid electrolyte mixture.

Advantageously, the glass ceramic solid electrolyte mixture comprises between 50 and 85 % by weight of borate, between 10 and 40 % by weight Li₂SO₄ and between 1 and 10 % by weight of lithium halide, preferably between 65 and 75 % by weight of borate, between 20 and 30 % by weight Li₂SO₄ and between 3 and 7 % by weight of lithium halide, based on the total weight of the glass ceramic solid electrolyte mixture.

Advantageously, the borate comprises or substantially consists of Li₃BO₃.

Advantageously, the lithium halide is LiCI, i.e. the halide advantageously is chloride.

According to a second aspect of the present disclosure, there is provided a glass ceramic solid electrolyte as set out in the appended claims.

Advantageously, the glass ceramic solid electrolyte is obtained or obtainable by sintering of the glass ceramic solid electrolyte mixture of the first aspect.

The glass ceramic solid electrolyte comprises or substantially consists of a ternary glass ceramic of borate, Li₂SO₄ and a lithium halide, wherein the borate and the lithium halide are as described hereinabove.

Advantageously, the glass ceramic solid electrolyte comprises or substantially consists of a matrix comprising or substantially consisting of the borate. Advantageously, the lithium halide and Li₂SO₄ are dispersed within the matrix.

Advantageously, the borate is at least partially present in or comprised within the glass ceramic solid electrolyte as a glassy phase, for example a glass network.

The term "at least partially present or comprised within as a glassy phase" is used in the present disclosure to refer to at least 25 %, preferably at least 50 %, more preferably at least 75 % of the borate being present in the glass ceramic solid electrolyte as a glassy phase.

Advantageously, the glass ceramic solid electrolyte has a total ionic conductivity between 10⁻⁵ and 10⁻⁹ S/cm, preferably between 10⁻⁵ and 10⁻⁸ S/cm at a temperature between room temperature and 100 °C.

According to a third aspect of the present disclosure, there is provided a solid state battery as set out in the appended claims.

The solid state battery comprises an electrolyte according to the second aspect of the present disclosure, i.e. an electrolyte comprising or substantially consisting of a ternary glass ceramic of borate, Li₂SO₄ and a lithium halide, or an electrolyte obtained by sintering the glass ceramic solid electrolyte mixture of the first aspect of the present disclosure.

Advantageously, the solid state battery is an all ceramic solid state battery. Advantageously, the solid state battery is a secondary battery.

According to a fourth aspect of the present disclosure, there is provided a method of producing a glass ceramic solid electrolyte as set out in the appended claims.

Advantageously, the glass ceramic solid electrolyte produced is according to the second aspect of the present disclosure, i.e. comprises or substantially consists of a ternary glass ceramic of borate, Li₂SO₄ and a lithium halide, wherein the borate and the lithium halide are as described hereinabove.

The method comprises sintering a glass ceramic solid electrolyte mixture comprising or substantially consisting of a ternary glass ceramic of borate, Li₂SO₄ and a lithium halide, wherein the borate and the lithium halide are as hereinabove described. Advantageously, the glass ceramic solid electrolyte mixture is according to the first aspect of the present disclosure.

The mixture is sintered at a temperature between 600 °C and 1000 °C, preferably between 700 °C and 900 °C, more preferably between 750 °C and 850 °C, in an inert atmosphere.

According to a fifth aspect of the present disclosure, there is provided a method of producing a solid state battery as set out in the appended claims. Advantageously, the solid state battery is according to the third aspect of the present disclosure, i.e. advantageously an all ceramic solid state battery.

According to a first embodiment, the method comprises:
- applying a glass ceramic solid electrolyte mixture according to the first aspect of the present disclosure to a surface of an anode or a cathode,
- sintering the mixture-anode or mixture-cathode assembly a temperature between 600 °C and 1000 °C, preferably between 700 °C and 900 °C, more preferably between 750 °C and 850 °C, in an inert atmosphere, and
- providing a cathode or an anode at the exposed surface of the sintered mixture, thereby obtaining the solid state battery.

According to a second embodiment, the method comprises providing a glass ceramic solid electrolyte mixture according to the first aspect of the present disclosure between an anode and a cathode, and sintering the anode-mixture-cathode assembly, wherein the sintering is performed at a temperature and in an atmosphere as hereinabove described for the first embodiment.

The inventors have surprisingly discovered that the presence of a lithium halide in the glass ceramic solid electrolyte mixture allows to significantly reduce the sintering temperature for ternary glass ceramic of borate comprising compounds, for example from temperatures of 950 °C up to 1050 °C and even higher temperatures, to temperatures between 800 °C and 850 °C. Without wishing to be bound by any theory, the inventors believe that the lower sintering temperature is made possible by the fact that the lithium halide - which has a melt temperature lower than the sintering temperature (for example 605 °C for LiCI) - will be in a molten state during sintering, thereby leading to so-called liquid phase sintering or liquid assisted sintering, wherein the presence of a liquid (the molten lithium halide) accelerates the bonding between the other components, thereby allowing a lower sintering temperature.

An advantage of this substantially lower sintering temperature is that it becomes possible to co-sinter the mixture with one or both of the anode and the cathode, thereby rendering the method of producing a solid state battery, in particular an all ceramic solid state battery, less complex and less energy consuming. It is known that for all ceramic SSBs, the anode and/or the cathode comprise materials that require sintering at temperatures below 1000 °C, preferably even below 900 °C, in order to avoid any degradation or damage, leading to inferior batteries.

Consequently, since the methods of the invention and the glass ceramic solid electrolyte mixture allow sintering at sub-1000 °C temperatures, it becomes possible to assemble first the anode and/or the cathode with the glass ceramic solid electrolyte mixture, and then perform a single sintering step. This is contrary to prior art methods which require separate sintering steps for the anode and/or the cathode on one hand - at sub-1000 °C temperatures, and for the SSE at the other hand - at temperatures above 1000 °C.

Advantages of the methods and the glass ceramic solid electrolyte mixture of the invention thus include lower energy consumption during sintering, and a less complex process of producing a solid state battery, in particular an all ceramic solid state battery.

### Description of the figures

Aspects of the invention will now be described in more detail with reference to the appended drawings, wherein same reference numerals illustrate same features and wherein:
- Figure 1 shows the X-ray diffraction (XRD) pattern for a glass ceramic solid electrolyte of the invention after grinding the electrolyte to a powder;
- Figures 2 and 3 show scanning electron microscope (SEM) images of the cross-section of an inventive glass ceramic solid electrolyte at different magnifications;
- Figure 4 shows the energy dispersive X-ray analysis (EDX) analysis from the cross-section of an inventive glass ceramic solid electrolyte;
- Figure 5 shows the total ionic conductivity for a Li-Li symmetrical cell comprising an inventive glass ceramic solid electrolyte; and
- Figure 6 shows the galvanostatic cycling of an inventive battery cell.

### Detailed description of the invention

The glass ceramic solid electrolyte mixture and the glass ceramic solid electrolyte of the present disclosure comprise or substantially consist of a ternary glass ceramic of borate, Li₂SO₄ and a lithium halide.

Advantageously, the borate comprises or substantially consists of Li₃BO₃. Alternatively or additionally, yet advantageously, the borate can comprise one or more of B₂O₃, LiBO₂, Li₄B₂O₅, and Li₆B₄O₉.

The halide can be any one of chloride, bromide, iodide, fluoride, preferably chloride or fluoride, more preferably chloride. The lithium halide can thus be any one of LiCI, LiBr, LiI and LiF, preferably LiCI or LiF, more preferably LiCl. The glass ceramic solid electrolyte can comprise two or more lithium halides, advantageously two or more of LiCI, LiBr, LiI and LiF.

Advantageously, the glass ceramic solid electrolyte comprises between 50 and 85 % by weight, preferably between 60 and 80 % by weight, more preferably between 65 and 75 % by weight, for example 70 % by weight of borate, based on the total weight of the glass ceramic solid electrolyte.

Advantageously, the glass ceramic solid electrolyte comprises between 10 and 40 % by weight, preferably between 15 and 35 % by weight, more preferably between 20 and 30 % by weight, for example 25 % by weight Li₂SO₄, based on the total weight of the glass ceramic solid electrolyte.

Advantageously, the glass ceramic solid electrolyte comprises between 1 and 10 % by weight, preferably between 2 and 8 % by weight, more preferably between 3 and 7 % by weight, for example 5 % by weight of lithium halide, based on the total weight of the glass ceramic solid electrolyte.

Advantageously, the glass ceramic solid electrolyte comprises between 50 and 85 % by weight of borate, between 10 and 40 % by weight Li₂SO₄ and between 1 and 10 % by weight of lithium halide, preferably between 65 and 75 % by weight of borate, between 20 and 30 % by weight Li₂SO₄ and between 3 and 7 % by weight of the lithium halide, based on total weight of the glass ceramic solid electrolyte.

Advantageously, the glass ceramic solid electrolytes of the present disclosure are dense electrolytes, i.e. electrolytes having a low porosity. More particularly, the electrolytes advantageously have a density equal to or higher than 70 % of the theoretical density of the electrolyte. The theoretical density is calculated from the densities of the compounds comprised in the electrolyte and the composition of the electrolyte (amount of each compound). The density of the electrolyte is calculated by dividing its weight by its volume.

The present invention further relates to solid state batteries (i.e. all solid batteries) (SSBs), in particular secondary batteries, comprising the inventive glass ceramic solid electrolyte.

Advantageously, the battery further comprises a cathode, which can be any suitable cathode known in the art. Advantageously, the battery further comprises an anode, which can be any suitable anode known in the art.

Advantageously, the SSB is an all ceramic SSB, i.e. a SSB wherein all components - anode, cathode and electrolyte, are ceramic materials.

The present invention also relates to methods of producing the glass ceramic SSE. The method advantageously comprises an operation of preparing a mixture, a shaping operation and a sintering operation.

Advantageously, the mixture preparation operation comprises mixing a borate, Li₂SO₄ and a lithium halide, wherein the borate and the lithium halide are as hereinabove described. To obtain a homogeneous mixture, mixing techniques known in the art can be used, for example ball-milling or pearl-milling.

Advantageously, the mixture comprises between 50 and 85 % by weight of borate, preferably Li₃BO₃, between 10 and 40 % by weight Li₂SO₄ and between 1 and 10 % by weight of lithium halide, preferably LiCI, preferably between 65 and 75 % by weight of borate, between 20 and 30 % by weight Li₂SO₄ and between 3 and 7 % by weight of lithium halide, based on the total weight of the mixture.

Advantageously, the mixture is shaped during a shaping operation. Shaping can be performed by methods known in the art, for example by pressing the mixture into a predetermined shape or by laser cutting the mixture into a predetermined shape. Upon shaping, a green body is obtained. The green body can have a variety of shapes, such as a sheet, a pellet, a disk, etc., wherein the shape is defined by the shape required for the composite solid electrolyte.

The green body is then sintered during the sintering operation. The sintering operation comprises heating the green body to a sintering temperature, and maintaining the green body at the sintering temperature for a predetermined sintering duration, during which the green body is sintered.

Advantageously, the sintering operation is performed in an atmosphere known in the art. Preferably, the sintering operation is performed in an inert atmosphere, more preferably in an inert atmosphere comprising or substantially consisting of argon.

Advantageously, the sintering temperature is between 600 °C and 1000 °C, preferably between 700 °C and 900 °C, more preferably between 750 °C and 850 °C.

Advantageously, heating the green body to the sintering temperature is performed at a heating rate between 5 °C/s and 500 °C/s, i.e. can be at a traditional heating rate or at an ultrafast heating rate.

Advantageously, the sintering duration is between 5 seconds and 600 seconds, preferably between 10 seconds and 300 seconds, more preferably between 20 seconds and 200 seconds, such as between 30 seconds and 150 seconds, or between 45 seconds and 100 seconds.

It will be understood that the sintering duration depends, amongst others, on the heating rate, the sintering temperature and the equipment used.

### Examples

### Example 1

A mixture of 7.0 g Li₃BO₃, 2.5 g Li₂SO₄ and 0.5 g LiCI was ball-milled at 400 rpm for 2 hours under an argon atmosphere. The mixture was then pressed into green body pellets with an uniaxial press.

The green body pellets were then heated to 825 °C and sintered at 825 °C for 100 seconds, followed by cooling down to room temperature. The obtained glass ceramic solid electrolyte pellets were then partially ground to powder and partially cut into pieces for analysis.

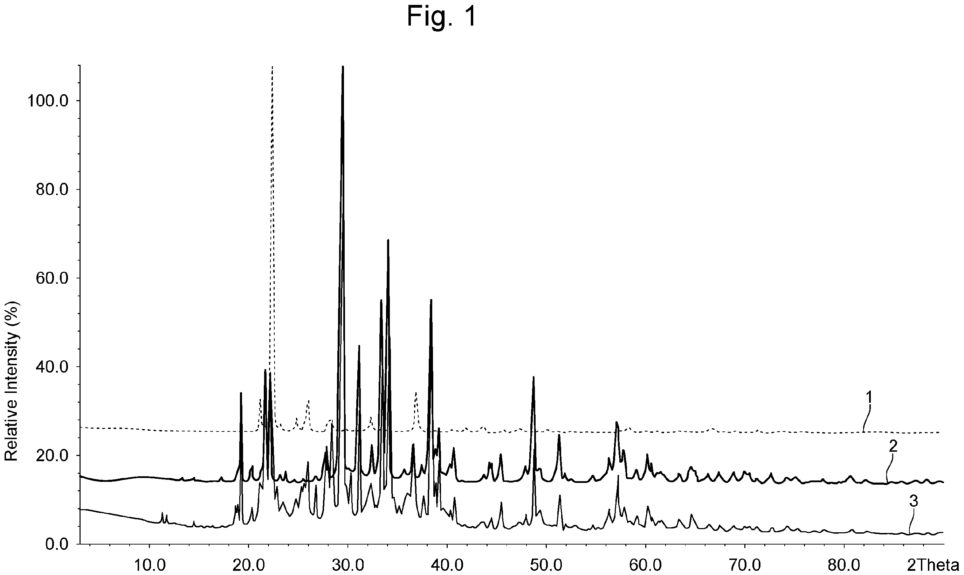

Fig. 1 shows the X-ray diffraction (XRD) pattern for the Li₂SO₄, Li₃BO₃ and the glass ceramic solid electrolyte powder (referenced to as 1, 2 and 3, respectively). Comparison of the XRD patterns clearly indicates the presence of Li₂SO₄ and Li₃BO₃ in the electrolyte. The signal at 2θ between 0° and 20° further indicates the presence of glassy phases, which are believed to be formed by Li₃BO₃.

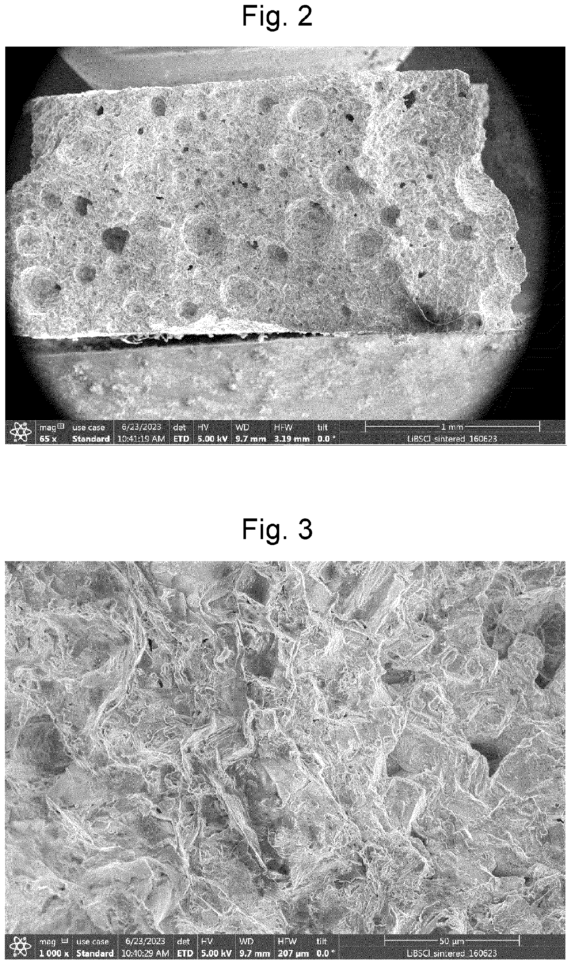

Scanning Electron Microscopy (SEM)-analysis was performed on pieces of the glass ceramic solid electrolyte using a high resolution scanning electron microscope FEI (Teneo) under high-vacuum. Figs. 2 and 3 show SEM-images at different magnifications of the cross-section of the glass ceramic solid electrolyte. At low magnification (Fig. 2) a dense structure is visible. At higher magnification (Fig. 3) a glassy phase matrix is clearly visible - contributed to Li₃BO₃ - with crystalline phases dispersed therein.

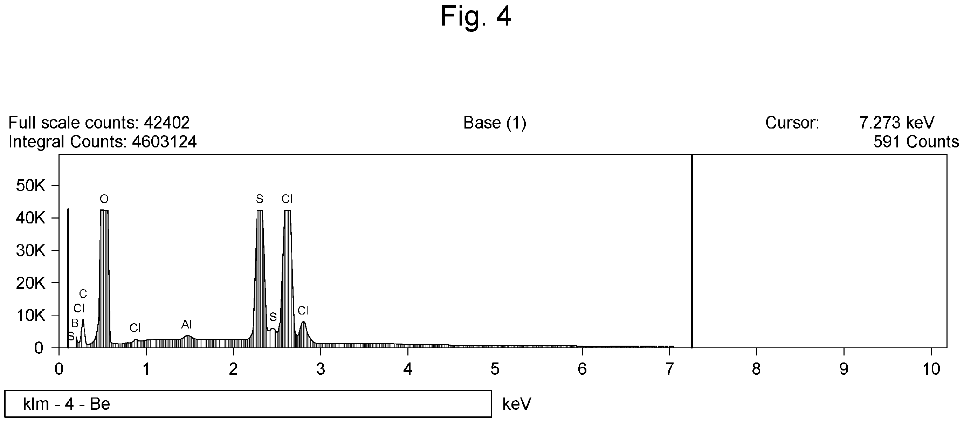

Fig. 4 shows the energy dispersive X-ray analysis (EDX) analysis from the cross-section of the electrolyte. All elements of Li₃BO₃, Li₂SO₄ and LiCI were detected. This confirms that all components of the mixture are retained in the obtained glass ceramic solid electrolyte.

### Example 2

A Li-Li symmetric cell comprising the glass ceramic solid electrolyte of Example 1 was prepared to measure the total ionic conductivity and the electrochemical properties. The inventive Li-Li symmetric cell was prepared with a 800 µm thick glass ceramic solid electrolyte pellet as prepared in Example 1, metallic lithium with a thickness of 50 µm as electrodes and copper foils with a thickness of 5-8 µm as current collectors.

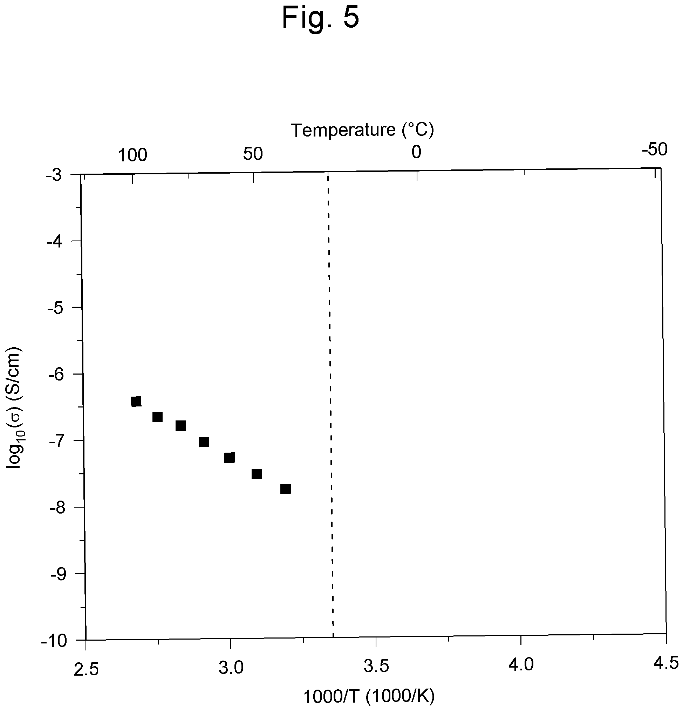

Fig. 5 shows the total ionic conductivity at temperatures varying between room temperature and 100 °C. At room temperature, the total ionic conductivity was 2 * 10⁻⁸ S/cm, whereas at 100 °C the total ionic conductivity was 4 * 10⁻⁷ S/cm.

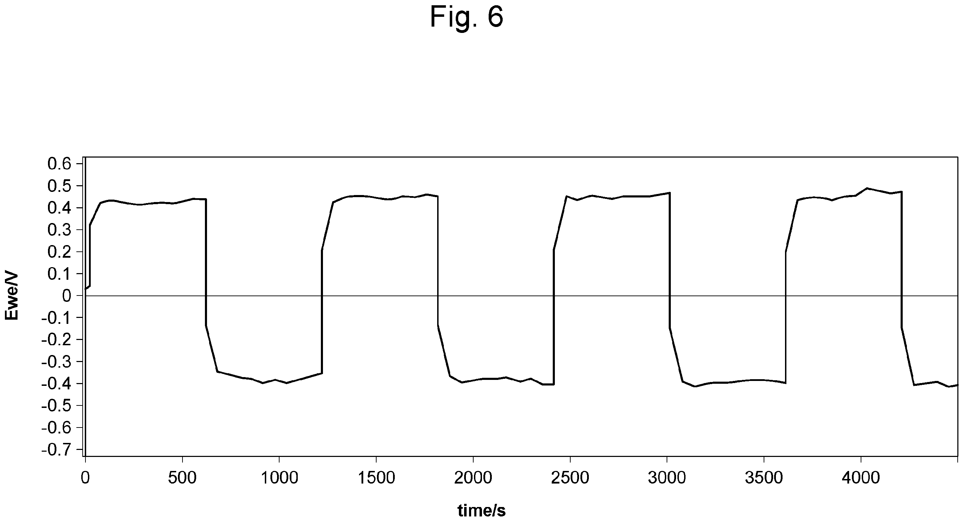

Galvanostatic cycling of the inventive Li-Li symmetric cell was also performed at 100 °C and at a current density of 0.1 mA/cm². From Fig. 6 it is clear that a stable cycling was seen for a test duration of more than 4500 seconds.

### Nomenclature

1. XRD pattern for Li₂SO₄
2. XRD pattern for Li₃BO₃
3. XRD pattern for an inventive glass ceramic solid electrolyte

## Claims

1. A glass ceramic solid electrolyte mixture comprising a ternary glass ceramic of borate, Li₂SO₄ and a lithium halide.

2. The glass ceramic solid electrolyte mixture according to claim 1, comprising between 50 and 85 % by weight of borate, between 10 and 40 % by weight Li₂SO₄, and between 1 and 10 % by weight of lithium halide, based on the total weight of the glass ceramic solid electrolyte mixture.

3. The glass ceramic solid electrolyte mixture according to any one of the preceding claims, wherein the borate comprises Li₃BO₃.

4. The glass ceramic solid electrolyte mixture according to any one of the preceding claims, wherein the lithium halide comprises LiCl.

5. A glass ceramic solid electrolyte obtainable by sintering the glass ceramic solid electrolyte mixture according to any one of the preceding claims, wherein the glass ceramic solid electrolyte mixture comprises a ternary glass ceramic of borate, Li₂SO₄ and a lithium halide.

6. The glass ceramic solid electrolyte according to claim 5, comprising a matrix comprising the borate, and wherein the lithium halide and Li₂SO₄ are dispersed within the matrix.

7. The glass ceramic solid electrolyte according to any one of claims 5 to 6, wherein the borate is at least partially comprised within the electrolyte as a glassy phase.

8. The glass ceramic solid electrolyte according to any one of claims 5 to 7, wherein the borate comprises Li₃BO₃.

9. The glass ceramic solid electrolyte according to any one of claims 5 to 8, having a total ionic conductivity between 10⁻⁵ and 10⁻⁹ S/cm at a temperature between room temperature and 100 °C.

10. A solid state battery, comprising the glass ceramic solid electrolyte according to any one of claims 5 to 9.

11. The solid state battery according to claim 10, being an all ceramic solid state battery.

12. A method of producing a glass ceramic solid electrolyte comprising a ternary glass ceramic of borate, Li₂SO₄ and a lithium halide, comprising sintering the mixture of any one of claims 1 to 4 at a temperature between 600 °C and 1000 °C in an inert atmosphere.

13. A method of producing a solid state battery comprising the glass ceramic solid electrolyte of any one of claims 5 to 9 or obtained by the method of claim 12, comprising
- applying the glass ceramic solid electrolyte mixture of any one of claims 1 to 4 to a surface of an anode or a cathode,
- sintering at a temperature between 600 °C and 1000 °C in an inert atmosphere, and
- providing a cathode or an anode at the exposed surface of the sintered mixture, thereby obtaining the solid state battery.

14. The method of producing a solid state battery according to claim 13, wherein both the anode and the cathode are provided prior to sintering, thereby providing the glass ceramic solid electrode mixture between the anode and the cathode, and wherein sintering comprises sintering of the anode-mixture-cathode assembly.
